# EUROPEAN PATENT SPECIFICATION

(11) **EP 0 876 755 B1**
(45) Date of publication and mention of the grant of the patent: **29.03.2006**
(21) Application number: 98830248.5
(22) Date of filing: 24.04.1998
(51) Int. Cl.: A01G 9/02, A01G 27/00

(54) **Modular pot with built-in irrigation system**
Modultopf mit eingebautem Bewässerungssystem
Pot modulaire avec système d'irrigation intégré

(30) Priority: 05.05.1997 IT RM970092 U
(43) Date of publication of application: 11.11.1998
(73) Proprietor: Paolantoni, Pier Luigi, 00141 Roma (IT)
(72) Inventor: Paolantoni, Pier Luigi, 00141 Roma (IT)
(74) Representative: Iannone, Carlo Luigi

(56) References cited:
- DE-A- 2 200 176
- US-A- 4 347 687

## Description

The present invention relates to a modular pot with built-in irrigation system.

More particularly, the invention relates to a modular pot realised in such a way to directly provide what is necessary to be able to realise also the irrigation system.

As it is well known, recently the automatic irrigation systems had a very large diffusion, said systems providing a programmable timed electronic unit, connected to the water intake, a main tube, placed close to the pots, or of the plants to be watered, a series of little derivation tubes, rebranching from said main tube close to each unit to be watered, as well as micro-sprayers or dippers at the end of said derivation little tubes.

A modular pot with such an irrigation system is described in document DE 2 200 176 A, which discloses the preambule of claim 1.

Functionality of these systems is clear, and it is demonstrated by the remarkable diffusion they have reached.

It is also sure that the same kind of system has many drawbacks.

For example, the aesthetical problems can be mentioned, due to the need of placing on the terrace or in the gardens many meters of tube, that not always can be easily camouflaged, to reach the different pots and plants, so that not always it is possible to obtain a final configuration enough tidy.

Furthermore, the tube thus provided is subject to deterioration and/or breakage due to overlooked shuffling, to pet or other animals bites, to the resting of pots and other heavy elements on the tube.

In view of the above, the Applicant has realised a modular pot in such a way to be able to be assembled in function of the various needings, arranged beforehand to be inserted in an automatic irrigation system, the same pot being a part of the irrigation system.

The solution suggested according to the present invention allows to find out a response to each kind of architecture of garden and/or terrace and/or apartment or closed room, since it provides the opportunity of having at disposal components suitable for any needing.

It is therefore specific object of the present invention a modular pot, providing at least one water entrance, at least a main tube section for water feeding, at least a little branch tube, connected at the end of said tube section, and a micro-sprayer or dipper for each one of said branch tubes, on the other end of said branch tube, said at least one tube section and said at least branch tube, except for the portion bearing said micro-sprayer or dipper, being provided within the pot in such a position to be under the earth level contained within the same.

Preferably, according to the invention, said pot provides also one outlet connected to at least a feeding tube section, to be connected, directly or indirectly, by the provision of a connector, with the inlet of another modular pot.

According to the invention, said main tube and said at least one branch little tube can be embedded into the pot, realised separately with respect to the pot and provided inside or outside the pot, or directly obtained through the pot.

Still according to the invention, said pot comprises two branch little tubes, provided at the ends of the pot, each on them provided with its own micro-sprayer or dipper.

Always according to the invention, said at least one feeding tube section is T-shaped, the pot provided three inlet and/or outlet couplings.

Furthermore, according to the invention, said pot can have a corner shape.

Further, the modular pot according to the invention can be laid on the ground or be arranged beforehand for the fixing to the wall or cantilevered to the windowsill.

The invention further provides a coupling structure between the modular pots, particularly to realise passages, or to pass doors and/or windows, providing single coupable elements, right or curved with different angles, each one provided with a section feeding tube, provided at the ends with means for the coupling with an adjacent element, and at least one, preferably two, support section, laterally provided with respect to the tube section and coupled to the same by transverse elements, the latter being also provided with means for the coupling with the support elements of an adjacent element.

Still according to the invention, a support sheath can be provided for the connection tube provided among the pots, said sheath being eventually provided with means for the fixing to the wall or to the ground.

The present invention will be now described, for illustrative but not limitative purposes, according to its preferred embodiments, with particular reference to the figures of the enclosed drawings, wherein:
figure 1 is a perspective view of a first modular pot according to the invention;
figure 2 shows a first particular of the pot of figure 1;
figure 3 shows a second particular of the pot of figure 1;
figure 4 is a lateral view of a second pot according to the invention;
figure 5 is a plan view of a third pot according to the invention;
figure 6 is a plan view of a fourth pot according to the invention;
figure 7 is a perspective view on a fifth pot according to the invention;
figure 8 is a perspective view of a solution for the connection among the various pots according to the invention;
figure 9 is an exploded perspective view of a protection sheath of the connection tubes between the pots according to the invention;
figure 10 is a closed perspective view of the sheath of figure 9; and
figure 11 is a schematic view of a possible garden architecture that can be realised according to the invention.

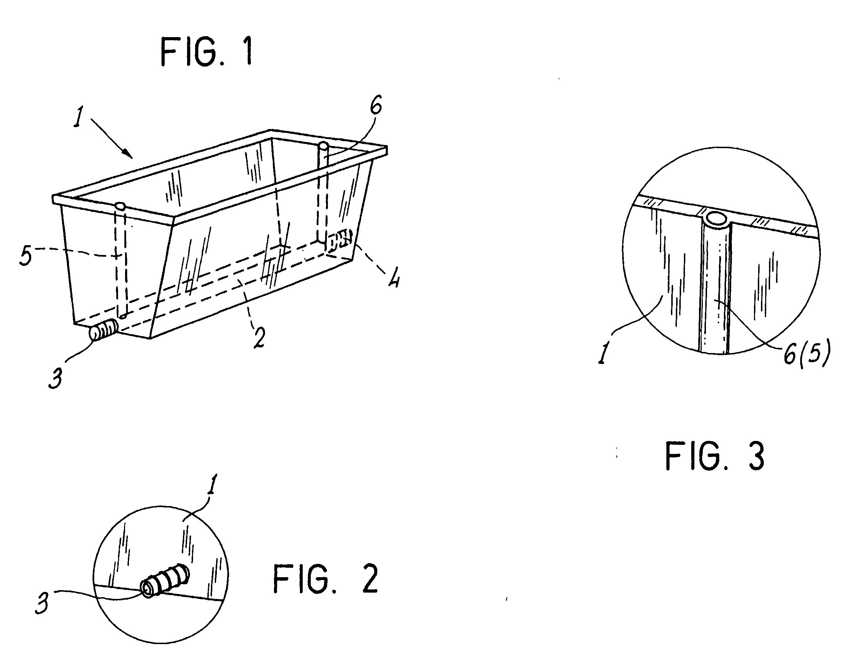

Observing now figures 1 - 3, it can be noted a pot 1 according to the invention providing the basic technical solutions. The various pots shown in the following figures in any case provide the basic solutions shown in figures 1 - 3.

Pot 1 provides a feeding tube 2, provided inside and below the same, communicating outward by two couplings 3, 4, respectively inlet and outlet couplings, to which is coupled by a connection, not shown, for the connection with another pot 1.

Two little branch tubes 5, 6 provided at the end of the tube 2, begin from said tube 2 to water plants provided within the pot.

On the end of each branch tube 5, 6 a micro-sprayer or dipper (not shown) of any kind is provided, suitable to the specific needings.

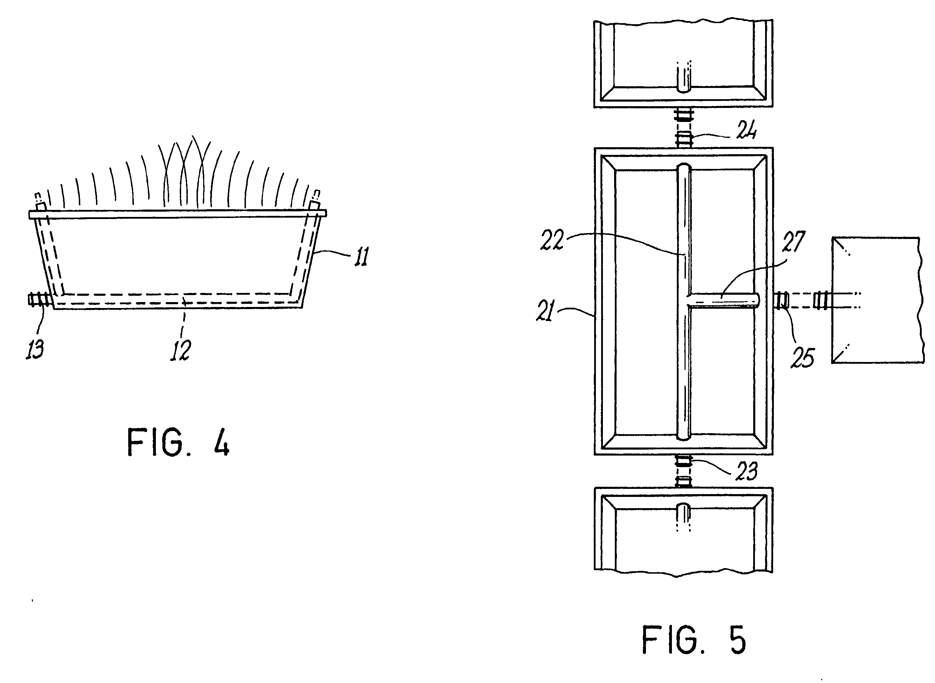

Pot 11 shown in figure 4 is of the "end" kind, since it provides only an inlet coupling 13, but there is no exit, so that it will be used at the end of the irrigation circuit.

Instead, pot 21 shown in figure 21 has a third coupling, that will be used as inlet or outlet according to the configuration of the implant for the connection of three different pots. In this case, two couplings 23 and 24 could be both outlets and the inlet could be the coupling 25.

In this case tube 22 provides a T branch 27.

Obviously, two opposed branches 27 could be provided having four different outer couplings.

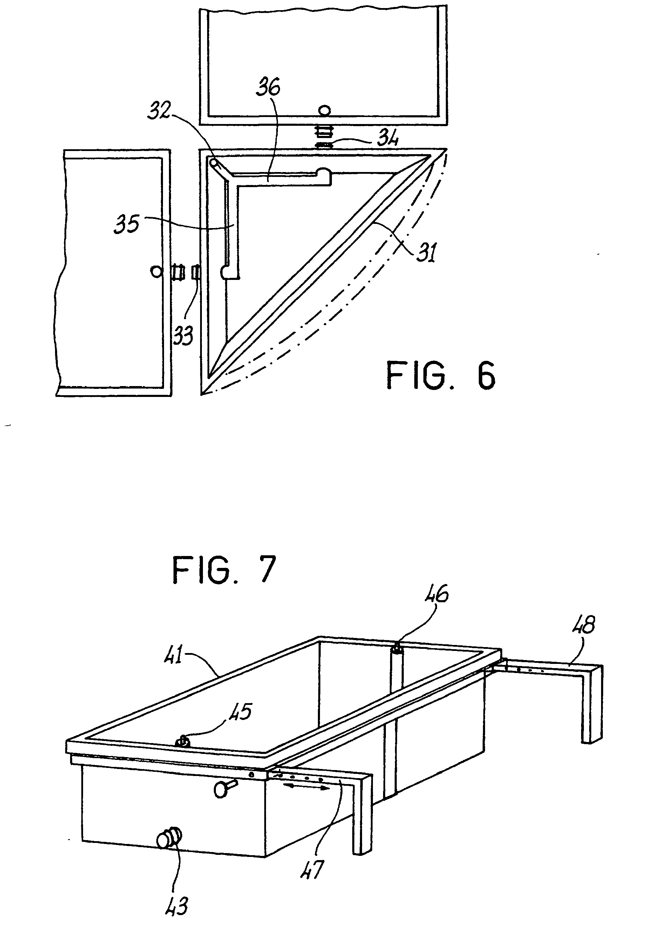

Pot 31 shown in figure 6 is of the corner kind, providing a feeding tube 32, two couplings 33 and 34, beside the branch tubes 35 and 36.

Instead, the pot 41 shown in figure 7, which can take all the previous configurations, even if in figure is shown with the configuration of figure 1, is realised with two brackets 48 for the fixing to the wall or for the cantilevered positioning on a windowsill.

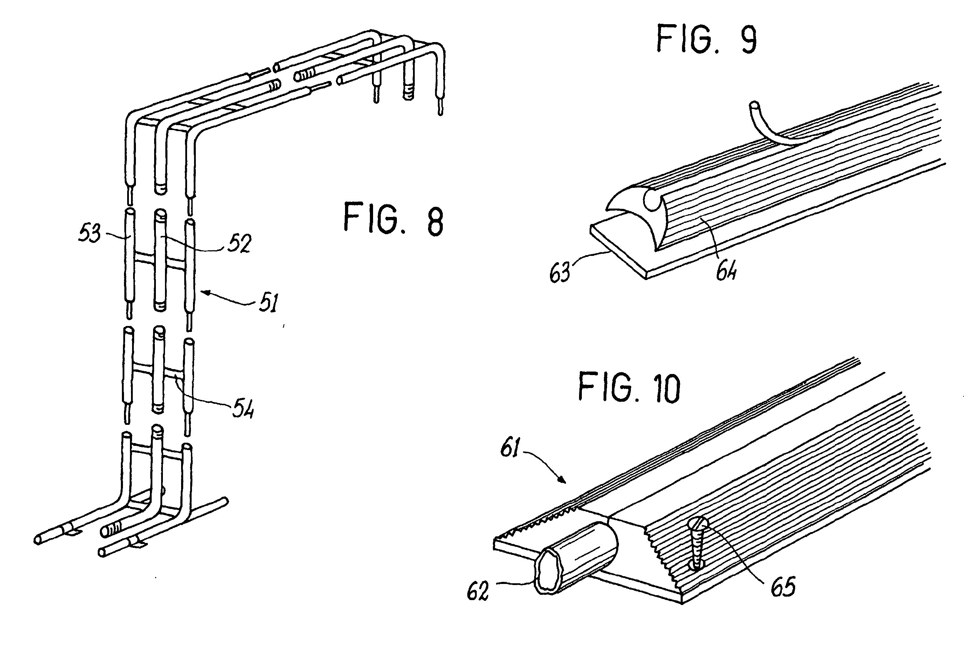

In figure 8 a solution according to the invention is shown, allowing to realise any kind of structure, thus building arches, windows, pedestrian passages, doors, ecc.

The structure provides a single module 51 coupable to adjacent modules by screwing, snapping, fixed joint, or any other kind of coupling. Each module 51 has a central tube 52 for the feeding of the water, and two lateral support elements 53, connected to the central tube section 52 by transverse elements 54.

As it can be noted from the figure, each module 51 can be straight or curve, with a variable angle according to the needings.

In figure 9 and 10, a sheath 61 for the protection of the tubes 62 connecting the various pots is shown.

Said sheath 61 is comprised of two parts 63 and 64, among which the tube 62 is placed, and can be fixed to the ground or to the wall, for example by the fixing screws 65.

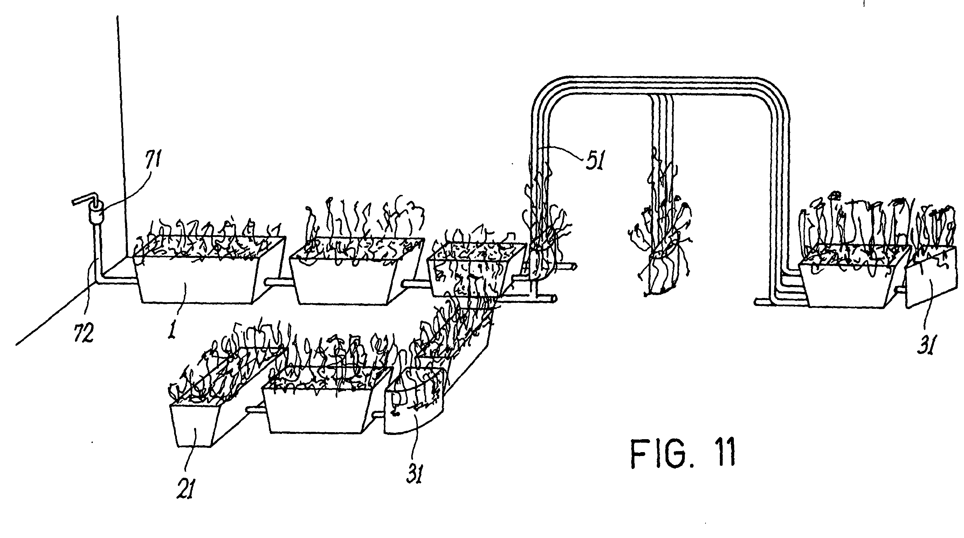

Finally, in figure 11 it is shown for illustrative purposes only, a garden architecture realised employing the various elements according to the invention.

From the water plug 71, in correspondence of which a calcium particles magnetic flux disaggregator and a water timer or computer can be provided, a tube 72 begins, reaching various pots according to the invention. Modules 51 allow to realise arches and doors according to the needings.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Modular pot (1) providing at least one water entrance (3), at least a main tube section (2) for water feeding, at least a little branch tube (5), connected at the end of said tube section (2), and a micro-sprayer or dipper for each one of said branch tubes, on the other end of said branch tube **characterised in that,** said at least one tube section and said at least branch tube (5), except for the portion bearing said micro-sprayer or dipper, are provided within the pot in such a position to be under the earth level contained within the same.

2. Pot (1) according to claim 1, **characterised in that** it provides also one outlet (4) connected to at least a feeding tube section (2), to be connected, directly or indirectly, by the provision of a connector, with the inlet (3) of another modular pot.

3. Pot (1) according to one of the preceding claims, **characterised in that** said main tube (2) and said at least one branch little tube (5) can be embedded into the pot, realised separately with respect to the pot and provided inside or outside the pot, or directly obtained through the pot.

4. Pot (1) according to one of the preceding claims, **characterised in that** said pot comprises two branch little tubes (5), provided at the ends of the pot, each on them provided with its own micro-sprayer or dipper.

5. Pot (1) according to one of the preceding claims, **characterised in that** said at least one feeding tube section is T-shaped, the pot provided three inlet and/or outlet couplings.

6. Pot (1) according to one of the preceding claims, **characterised in that** said pot has a corner shape.

7. Pot (1) according to one of the preceding claims, **characterised in that** it is laid on the ground.

8. Pot (1) according to one of the preceding claims 1 - 6, **characterised in that** it is arranged beforehand for the fixing to the wall or cantilevered to the windowsill.

9. Pot (1) according to one of the preceding claims, **characterised in that** it is further provided a coupling structure (51) between the modular pots, particularly to realise passages, or to pass doors and/or windows, providing single coupable elements, right or curved with different angles, each one provided with a section feeding tub (52), provided at the ends with means for the coupling with an adjacent element, and at least one, preferably two, support section (53), laterally provided with respect to the tube section and coupled to the same by transverse elements (54), the latter being also provided with means for the coupling with the support elements of an adjacent element.

10. Pot according to one of the preceding claims, **characterised in that** a support sheath (61) provided for the connection tube provided among the pots, said sheath being eventually provided with means (65) for the fixing to the wall or to the ground.

## Patentansprüche

1. Modultopf (1), der umfasst: zumindest einen Wassereinlass (3), zumindest einen Hauptrohrabschnitt (2) zur Wasserzuführung, zumindest ein kleines Zweigrohr (5), das mit dem Ende des Rohrabschnitts (2) verbunden ist, und einen an dem anderen Ende des Zweigrohres angeordneten Mikrozerstäuber oder Schwimmer für jedes der Zweigrohre, **dadurch gekennzeichnet, dass**
der zumindest eine Rohrabschnitt und das zumindest eine Zweigrohr (5), ausgenommen der den Mikrozerstäuber oder Schwimmer tragende Teil, innerhalb des Topfes in einer Position angeordnet sind, die unterhalb des Niveaus der in dem Topf enthaltenen Erde liegt.

2. Topf (2) nach Anspruch 1, **dadurch gekennzeichnet, dass** er auch einen mit dem zumindest einen Zuführrohrabschnitt (2) verbundenen Auslass (4) umfasst, der direkt oder indirekt durch das Vorsehen eines Verbinders mit dem Einlass (3) eines anderen Modultopfes verbunden ist.

3. Topf (1) nach einem der vorhergehenden Ansprüche, **dadurch gekennzeichnet, dass** das Hauptrohr (2) und das zumindest eine kleine Zweigrohr (5) in dem Topf integriert sein können, in Bezug auf den Topf getrennt ausgeführt und innerhalb oder außerhalb des Topfes vorgesehen oder direkt durchlaufend in dem Topf enthalten sein können.

4. Topf (1) nach einem der vorhergehenden Ansprüche, **dadurch gekennzeichnet, dass** der Topf zwei kleine Zweigrohre (5) umfasst, die an den Enden des Topfes vorgesehen sind, wobei jedes von ihnen mit ihrem eigenen Mikrozerstäuber oder Schwimmer ausgerüstet ist.

5. Topf (1) nach einem der vorhergehenden Ansprüche, **dadurch gekennzeichnet, dass** zumindest ein Zuführrohrabschnitt T-förmig ist, wobei der Topf drei Einlass- und/oder Auslasskupplungen aufweist.

6. Topf (1) nach einem der vorgehergehenden Ansprüche, **dadurch gekennzeichnet, dass** der Topf L-förmig ist.

7. Topf (1) nach einem der vorhergehenden Ansprüche, **dadurch gekennzeichnet, dass** er auf dem Boden angeordnet ist.

8. Topf (1) nach einem der vorhergehenden Ansprüche 1 bis 6, **dadurch gekennzeichnet, dass** er vor dem Erstarren der Wand oder freitragend an der Fensterbrüstung angeordnet wird.

9. Topf (1) nach einem der vorhergehenden Ansprüche, **dadurch gekennzeichnet, dass** er weiterhin eine Kupplungsstruktur (51) zwischen den modularen Töpfen aufweist, insbesondere zur Bildung von Durchführungen oder um Türen und/oder Fenster zu passieren, wobei die Kupplungsstruktur (51) einzelne, kuppelbare Elemente, die gerade oder in verschiedenen Winkeln gekrümmt sind, umfasst, wobei jedes an einem Abschnittszuführrohr (2) angeordnet ist und an den Enden mit Mitteln zum Verkuppeln mit einem benachbarten Element ausgerüstet ist, wobei die Kupplungsstruktur (51) weiterhin zumindest eine, vorzugsweise zwei, Tragstrukturen (53) aufweist, die in Bezug auf den Rohrabschnitt seitlich angeordnet sind und mit demselben durch Querelemente (54) verbunden sind, wobei die letzteren auch mit einem Mittel zum Verbinden mit den Tragelementen eines benachbarten Elements ausgerüstet sind.

10. Topf nach einem der vorhergehenden Ansprüche, **dadurch gekennzeichnet, dass** eine Lagerhülle (61) für das zwischen den Töpfen angeordnete Verbindungsrohr vorgesehen ist, wobei die Hülle gegebenenfalls mit einem Mittel (65) für die Befestigung an der Wand oder dem Boden ausgerüstet ist.

## Revendications

1. Pot modulaire (1) muni d'au moins une entrée d'eau (3), d'au moins une section de tube principal (2) pour l'amenée d'eau, d'au moins un petit tube ramifié (5) relié à l'extrémité de ladite section de tube (2) et d'un micro-pulvérisateur ou plongeur pour chacun desdits tubes ramifiés, sur l'autre extrémité dudit tube ramifié , **caractérisé en ce que** ladite au moins une section de tube et ledit au moins tube ramifié (5) excepté la partie porteuse dudit micro-pulvérisateur ou plongeur sont prévus dans le pot dans une position telle qu'ils se trouvent en dessous du niveau de la terre contenue dans celui-ci.

2. Pot (1) selon la revendication 1, **caractérisé en ce qu'**il comprend aussi une sortie (4) reliée à au moins une section de tube d'alimentation (6) reliée directement ou indirectement au moyen d'un connecteur avec l'entrée (3) d'un autre pot modulaire.

3. Pot (1) selon l'une des revendications précédentes, **caractérisé en ce que** ledit tube principal (2) et ledit au moins un petit tube ramifié (5) peuvent être encastrés dans le pot, réalisés séparément par rapport au pot et prévus intérieurement ou extérieurement au pot ou obtenus directement du pot.

4. Pot (1) selon l'une des revendications précédentes, **caractérisé en ce que** ledit pot comprend deux petits tubes ramifiés (5) prévus aux extrémités du pot chacun étant muni de son propre micro-pulvérisateur ou plongeur.

5. Pot (1) selon l'une des revendications précédentes, **caractérisé en ce que** ladite au moins une section de tube d'alimentation est en forme de T, le pot étant muni de trois couplages d'entrée et/ou de sortie.

6. Pot (1) selon l'une des revendications précédentes, **caractérisé en ce que** ledit pot a une forme de coin.

7. Pot (1) selon l'une des revendications précédentes, **caractérisé en ce qu'**il est déposé sur le sol.

8. Pot (1) selon l'une des revendications précédentes 1 à 6, **caractérisé en ce qu'**il est agencé au préalable pour la fixation au mur ou en porte à faux au rebord de fenêtre.

9. Pot (1) selon l'une des revendications précédentes, **caractérisé en ce qu'**il est, en outre, muni d'une structure de couplage (51) entre les pots modulaires, en particulier pour réaliser des passages ou pour passer des portes et /ou des fenêtres, fournissant des éléments unitaires aptes à être couplés, droits ou incurvés avec différents angles, chacun étant muni d'une section de tube d'alimentation (2) prévue aux extrémités avec le moyen pour le couplage à un élément contigu et d'au moins une, de préférence, deux sections de support (53) prévues latéralement par rapport à la section de tube et couplées à celui-ci par des éléments transversaux (54), ces derniers étant également munis de moyens pour le couplage avec les éléments de support d'un élément contigu.

10. Pot selon l'une des revendications précédentes, **caractérisé en ce qu'**une gaine de support (61) est prévue pour le tube de connexion prévu parmi les pots, ladite gaine étant éventuellement munie d'un moyen (65) pour la fixation à la paroi ou au sol.
